# EUROPEAN PATENT APPLICATION

(11) **EP 2 006 819 A2**
(43) Date of publication of application: **24.12.2008**
(21) Application number: 07739566.3
(22) Date of filing: 16.03.2007
(51) Int. Cl.: G08G 1/09, B60R 21/00, G01C 21/00, G06F 3/16, G10L 13/08, G10L 21/02, G10L 21/04

(54) **ON-VEHICLE DEVICE, VOICE INFORMATION PROVIDING SYSTEM, AND UTTERANCE SPEED ADJUSTING METHOD**

(30) Priority: 05.04.2006 JP 2006104463
(71) Applicant: Kabushiki Kaisha Kenwood, Hachiouji-shi, Tokyo 192-8525 (JP)
(72) Inventor: KUWAGAKI, Yoshiharu, Hachiouji-shi Tokyo 192-0906 (JP); KATOH, Yuuichi, Hannou-shi Saitama 357-0021 (JP); UEMURA, Nobuo, Akiruno-shi Tokyo 197-0802 (JP)
(74) Representative: Leinweber & Zimmermann
(86) International application number: PCT/JP2007/056125
(87) International publication number: WO 2007/114086

(57) **Abstract**

In an on-vehicle device (1), speech rate decision means (21) decides the speech rate when reproducing a voice from the received utterance voice information data. The voice signal generation means (21) generates a voice signal based on the utterance voice information data at the speech rate decided by the speech rate decision means (21). The voice based on the generated voice signal is outputted. A caution is surely performed to a user in the vehicle.

## Description

### TECHNICAL FIELD

The present invention relates to an on-vehicle device, a voice information providing system and a speech rate adjusting method.

### BACKGROUND ART

Techniques of adjusting the length and volume of voice depending on the running speed of a motorcycle are proposed (see, for instance, Japanese Patent Application Laid-Open No. 2002-140800 (paragraphs 0026 through 0031 and elsewhere)).

### DISCLOSURE OF THE INVENTION

However, volume adjustment depending on the running speed makes it difficult for the user to sense variations in volume and to be securely alerted because the voice information itself may fluctuate in volume and sounds in the environment including road noise and the running noise and horn sounds of other vehicles also vary.

An object of the present invention, attempted in view of the problems noted above, is to provide an on-vehicle device, a voice information providing system and a speech rate adjusting method that can securely alert the user.

In order to solve the problems, the invention is configured as described below.

An on-vehicle device pertaining to the invention is provided with speech rate determining means that determines a speech rate when reproducing speech from received speech voice information data, and speech signal generating means that generates speech signals based on that speech voice information data at the designated speech rate determined by the speech rate determining means.

The on-vehicle device pertaining to the invention may as well be as follows in addition to the on-vehicle device described above. Namely in that case, speech rate determining means, in reproducing speech from speech voice information data, uses a prescribed reference speech rate as the speech rate when the speech voice information data are not prescribed data of high urgency or uses a higher rate than the reference speech rate as the speech rate when the speech voice information data are prescribed data of high urgency.

The on-vehicle device pertaining to the invention may as well be as follows in addition to any of the on-vehicle devices described above. Namely in that case, the speech rate determining means, in reproducing speech from speech voice information data, determines the speech rate depending on the speed of the vehicle at the point of time.

The on-vehicle device pertaining to the invention may as well be as follows in addition to any of the on-vehicle devices described above. Namely in that case, reference speech rate setting means sets a reference speech rate depending on the action of a user upon input means, the speech rate determining means determines the speech rate on the basis of the reference speech rate and a designated speech rate value set in the speech voice information data, and the speech signal generating means generates speech signals based on the speech voice information data at the speech rate determined by the speech rate determining means.

The on-vehicle device pertaining to the invention may as well be as follows in addition to any of the on-vehicle devices described above. Namely in that case, the speech rate determining means determines the speech rate on the basis of the reference speech rate and a prescribed table in which the designated speech rates are set.

The on-vehicle device pertaining to the invention may as well be as follows in addition to any of the on-vehicle devices described above. Namely in that case, the speech rate determining means uses as the speech rate a value adjusted with reference to the designated speech rate value by a value corresponding to the reference speech rate value.

The on-vehicle device pertaining to the invention may as well be as follows in addition to any of the on-vehicle devices described above. Namely in that case, the speech rate determining means uses as the speech rate a value adjusted with reference to the reference speech rate by a value corresponding to the designated speech rate value.

The on-vehicle device pertaining to the invention may as well be as follows in addition to any of the on-vehicle devices described above. Namely in that case, the speech rate determining means determines the speech rate on the basis of the reference speech rate, the designated speech rate value and the speed of the vehicle.

The on-vehicle device pertaining to the invention may as well be as follows in addition to any of the on-vehicle devices described above. Namely in that case, the speech rate determining means determines the speech rate depending on the distance between a position depending on geographical position information added to the voice information data and the current position.

The on-vehicle device pertaining to the invention may as well be as follows in addition to any of the on-vehicle devices described above. Namely in that case, receiving means receives the speech voice information data from a roadside unit. The speech rate determining means, when the receiving means receives the speech voice information data, determines the speech rate at that point of time, and the speech signal generating means generates speech signals based on the speech voice information data at the speech rate determined by the speech rate determining means.

The on-vehicle device pertaining to the invention may as well be as follows in addition to any of the on-vehicle devices described above. Namely in that case, speech volume determining means determines the speech volume depending on the speech rate. The speech signal generating means generates speech signals based on speech voice information data at that speech rate and in the speech volume determined by the speech volume determining means.

A voice information providing system pertaining to the invention is provided with any of the on-vehicle devices described above and a server which transmits speech voice information data to the on-vehicle device via a roadside unit.

A speech rate adjusting method pertaining to the invention is provided with a step of determining a speech rate when reproducing speech from speech voice information data with an on-vehicle device mounted on a vehicle and a step of generating speech signals based on the speech voice information data at the determined speech rate.

The present invention makes it possible to securely alert the user.

### BRIEF DESCRIPTION OF THE DRAWINGS

FIG. 1 is a block diagram showing the configuration of a voice information providing system pertaining to Embodiment 1 for the invention;
FIG. 2 is a flow chart describing actions of an on-vehicle device in Embodiment 1 at the time of receiving voice information data;
FIG. 3 schematically illustrates a speech rate adjusting method in Embodiment 1;
FIG. 4 shows reference speech rates in the on-vehicle device and the relationship between designated speech rates from roadside units and actual speech rates in Embodiment 2;
FIG. 5 shows reference speech rates in the on-vehicle device and the relationship between designated speech rates from roadside units and actual speech rates in Embodiment 3;
FIG. 6 shows reference speech rates in the on-vehicle device and the relationship between designated speech rates from roadside units and actual speech rates in Embodiment 4; and
FIG. 7 shows reference speech rates in the on-vehicle device and the relationship between designated speech rates from roadside units and actual speech rates in Embodiment 5.

### BEST MODES FOR CARRYING OUT THE INVENTION

The embodiments of the present invention will be described below with reference to drawings.

### Embodiment 1

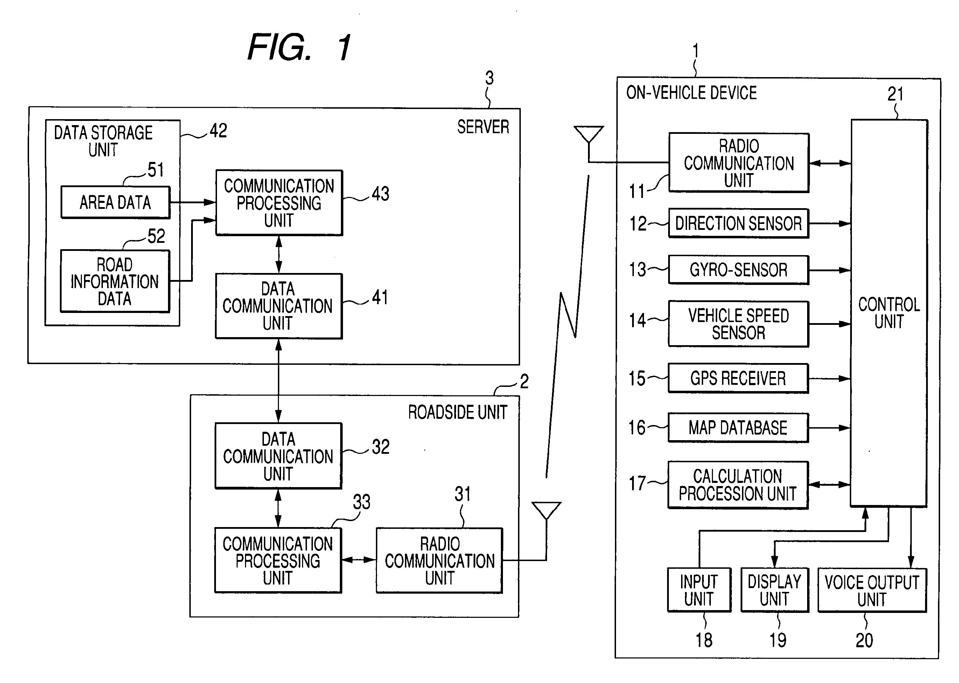

FIG. 1 is a block diagram showing the configuration of a voice information providing system pertaining to Embodiment 1 for the invention. Referring to FIG. 1, an on-vehicle device 1, representing an embodiment of the invention with respect to an on-vehicle device, is a device to be mounted on a vehicle. The on-vehicle device 1 in Embodiment 1 is an on-vehicle navigation device. Roadside units 2, installed beside, above or underneath a road on which the vehicle runs, is a device which provides the motor traffic of the road with various voice information data by push distribution of a short-range communication formula. The voice information data provided by the roadside units 2 include traffic information, road information regarding cautions to be taken regarding the road and the like, and area information on the vicinities. A server 3 is a device which is connected to the roadside units 2 by wired or wireless communication lines and transmits voice information data via the roadside units 2.

In the on-vehicle device 1, a radio communication unit 11 is a radio communication circuit which communicates with radio communication units 31 of the roadside units 2 by a prescribed radio communication formula. The radio communication unit 11 can use a DSRC (Dedicated Short Range Communication), optical beacon and the like as its radio communication formula. A direction sensor 12 is a sensor that detects the direction of the vehicle and outputs it as directional data. A gyro-sensor 13 is a sensor that detects the angular speed of the direction of the vehicle and outputs it as angular speed data. A vehicle speed sensor 14 is a sensor that detects the speed of the vehicle and outputs it as vehicle speed data. A GPS receiver 15 is a receiver that receives electric waves from GPS (Global Positioning System) satellites and outputs current position data including latitudinal information and longitudinal information. A map database 16 is a recording medium that stores map data for use in vehicle navigation and road data for use in route searching. As the map database 16, an optical disk and its driver, a hard disk drive or the like is used. A calculation procession unit 17 is a calculation procession circuit that executes, among other functions, generation of image data and/or speech data for use in route searching and navigation on the basis of road data in the map database 16 and the outputs of the sensors 12 through 14 and the GPS receiver 15.

An input unit 18, positioned as part of a user interface, is a section that includes an electronic part outputting information corresponding to the quantity of its manipulation. The input unit 18 is used for setting the destination of navigation and other purposes. As the input unit 18, a button switch, a touch panel system, a voice input system or the like is used. A display unit 19, positioned as part of a user interface, is a section that displays information provided by the roadside units 2 in addition to maps, road information, guide information and so forth. As the display unit 19, a thin display such as a liquid crystal display is used. A voice output unit 20, positioned as part of a user interface, includes a D/A converter, an amplifier, a loudspeaker and the like, and is a section that outputs voices matching speech data on information provided by the roadside units 2 in addition to road information, guide information and so forth. A control unit 21 is a section that controls other units on the basis of information from the radio communication unit 11, the input unit 18, the sensors 12 through 14, the GPS receiver 15 and so forth.

Incidentally, the calculation procession unit 17 and the control unit 21 may either be configured of respectively dedicated integrated circuits or be realized by having programs executed by a processor.

In each roadside unit 2, the radio communication unit 31 is a radio communication circuit that communicates with the radio communication unit 11 of the on-vehicle device 1 by a prescribed radio communication formula. A data communication unit 32 is a communication device that communicates with the server 3 via a telephone line, a leased line, a computer network or the like. A communication processing unit 33 is a processing unit that transmits voice information data received by the data communication unit 32 to the on-vehicle device 1 via the radio communication units 31. Incidentally, the communication processing unit 33 may either be configured of a dedicated integrated circuit or be realized by having a program executed by a processor.

In the server 3, a data communication unit 41 is a communication device that communicates with the roadside units 2. A data storage unit 42 is a recording medium that stores area data 51 including area information and road information data 52 including road information on the vicinities. As the data storage unit 42, an optical disk and its driver, a hard disk drive or the like is used. A communication processing unit 43 is a processing unit that reads voice information data such as road information out of the data storage unit 42, transmits them to the roadside units 2 via the data communication unit 41, and transmits voice information data from the roadside units 2 to the on-vehicle device 1. Incidentally, the communication processing unit 43 may either be configured of a dedicated integrated circuit or be realized by having a program executed by a processor.

Voice information provided to the on-vehicle device 1 includes area information and road information, which is stored into the data storage unit 42 as the area data 51, the road information data 52 and so forth. These sets of data are converted into text data for TTS (Text To Speech) use. The area data 51 are voice information data including area information on the vicinities, and the road information data 52 are voice information data including traffic information and cautioning information. The traffic information includes VICS information and congestion information. The cautioning information is information for arousing attention regarding prescribed positions of roads in the communication area of each roadside unit 2. For instance, cautioning voice information may include "Fallen rocks on road 1 km ahead" or "A car in trouble 2 km ahead".

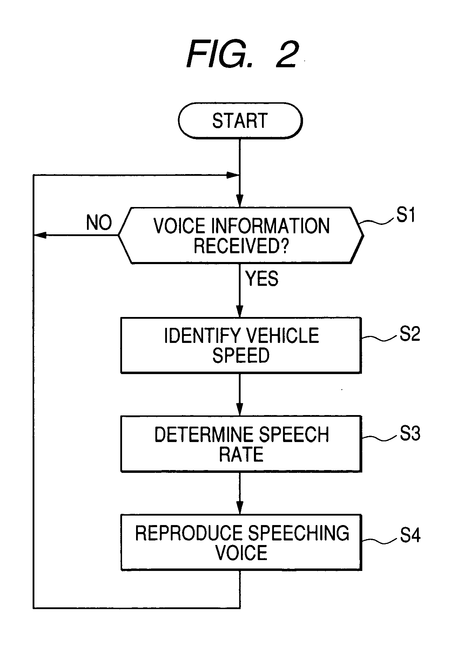

Next, the actions of devices in this system will be described. FIG. 2 is a flow chart describing actions of the on-vehicle device in Embodiment 1 at the time of receiving voice information data.

The communication processing unit 43 of the server 3 periodically reads out voice information data stored in the data storage unit 42 as the area data 51 or the road information data 52, and transmits them to the roadside units 2 via the data communication unit 41. The communication processing unit 33 of each roadside unit 2, when receiving such voice information data via the data communication unit 32, sends them out to a communication area via the radio communication units 31.

The radio communication unit 11 of the on-vehicle device 1, monitoring the state of reception of voice information data sent out from the roadside units 2 (step S1), receives voice information data sent out from a roadside unit 2 when the on-vehicle device 1 (namely the vehicle) enters the communication area of that roadside unit 2. The radio communication unit 11 supplies the received voice information data to the control unit 21.

The control unit 21, when the voice information data are received and supplied, acquires vehicle speed data at the time from the vehicle speed sensor 14 and identifies the vehicle speed at the time (step S2).

Next, the control unit 21 determines the speech rate of the voice information data on the basis of that vehicle speed (step S3). Then, the higher the vehicle speed, the higher the control unit 21 sets the speech rate. The control unit 21 may either calculate the speech rate as a prescribed function of the vehicle speed or derive a value matching the vehicle speed from a prescribed table.

Also the control unit 21, when category information such as emergency information notifying the occurrence of a disaster or the like, cautioning information notifying the presence of fallen rocks, a car in trouble, dense fog or the like, congestion information, required time information notifying the lengths of time taken to reach main geographical points and area information are added to the voice information data, may determine the speech rate depending on the vehicle speed as described above only for specific categories of voice information data such as emergency information, cautioning information and congestion information, with the speech rate fixed for voice information data for other categories. In that case, category information is added to each set of voice information data in the server 3, and supplied together with voice information data from the roadside units 2 to the on-vehicle device 1.

Also the control unit 21, when the voice information data are text data for TTS use, may determine whether or not they are cautioning information on the basis of words and sentences in the text data and determine the speech rate depending on the vehicle speed as described above only when the voice information is cautioning information and keep a fixed speech rate in all other cases.

Then, the control unit 21 generates speech signals at the determined speech rate on the basis of the voice information data and outputs them to the voice output unit 20 (step S4). In doing so, the control unit 21 generates digital speech signals from the text data for TTS use by using, for instance, a speech synthesizing technique. The voice output unit 20 outputs the voice information as aural speech on the basis of the speech signals through a loudspeaker or the like, which is not shown, to the user riding the vehicle.

As described so far, according to Embodiment 1, in the on-vehicle device 1, the control unit 21 as speech rate determining means determines the speech rate when reproducing voice from speech voice information data, and the control unit 21 as speech signal generating means generates speech signals based on the speech voice information data at the determined speech rate.

This enables the speech rate to be varied according to the situation and the user to be alerted without fail by raising the speech rate when cautioning voice information is to be given. As the speech rate is fixed at normal times, varying the speech rate can give a more secure alert than varying the voice volume, and the user can intuitively know the urgency of the information (and accordingly the situation around the point requiring caution) even if he is not particularly conscious of it.

Further according to Embodiment 1 described above, the radio communication unit 11 as receiving means receives speech voice information data from the roadside units 2. The control unit 21, when speech voice information data are received by the radio communication unit 11, determines the speech rate at the time, and generates speech signals based on the speech voice information data at the determined speech rate.

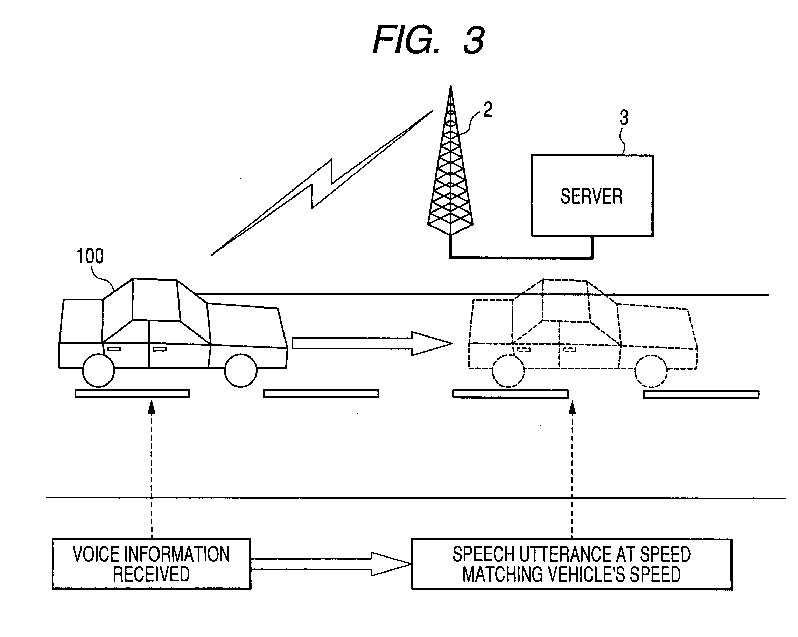

As this causes, when voice information is received in the area of a roadside unit 2, the speech to be uttered at a speed matching the running speed of a vehicle 100 at the time, as shown in FIG. 3, the user can be alerted as much more powerfully as the vehicle is running faster and accordingly alerted without fail. For instance, the user can be caused to sense greater urgency by raising the speech rate correspondingly higher for a vehicle, among vehicles approaching a geographical point deserving caution, expected to reach the point sooner. Further by determining the speech rate according only to the vehicle speed, no information for designating the speech rate needs to be supplied from any roadside unit 2 to the on-vehicle device 1, the data in the server 3 and data to be transmitted by the roadside units 2 can be reduced, resulting in a corresponding saving in system costs.

Further in Embodiment 1, when reproducing speech from speech voice information data, the control unit 21 judges the level of urgency based on the category of the speech voice information data and words in the data among other factors and, if the speech voice information data do not involve urgency of a high level, uses the reference speech rate as the speech rate or, speech voice information data do involve urgency of a high level, sets a higher rate than the reference speech rate as the speech rate.

In this way, by raising the speech rate only for voice information of a high urgency level, the user can be alerted more strongly against the voice information of the high urgency level.

### Embodiment 2

In a voice information providing system pertaining to Embodiment 2 of the present invention, a designated speech rate value is supplied together with voice information data from the server 3 to the on-vehicle device 1, and the speech rate is determined on the basis of a reference speech rate set by the user in the on-vehicle device 1 and that designated speech rate. Thus, the speech rate can be controlled both on the roadside units 2 side and on the on-vehicle device 1 side. Further in Embodiment 2, the speech rate is determined on the basis of the sum of the reference speech rate value and the designated speech rate value.

The hardware configurations of the on-vehicle device 1, the roadside units 2 and the server 3 in Embodiment 2 are substantially the same as those in Embodiment 1 (FIG. 1). However, each device executes the processing describe below.

The actions of each device in this system will be described.

In Embodiment 2, the control unit 21 of the on-vehicle device 1 while causing an image or characters to urge an inputting action to be displayed on the display unit 19 by controlling a user interface comprising the input unit 18 and the display unit 19, sets and stores a reference speech rate depending on the user's action on the input unit 18. The data of this reference speech rate value are stored in the control unit 21 or a recording medium such as a flash memory not shown. Incidentally, the reference speech rate will be a prescribed default value until one is set anew by an action of the user.

On the other hand, the data storage unit 42 of the server 3 stores, together with speech voice information data, a designated speech rate value designating the speech rate at the time of uttering the speech voice information data. The communication processing unit 43 of the server 3, when transmitting speech voice information data to the data communication unit 41 and the roadside units 2, also transmits the designated speech rate together.

The radio communication unit 11 of the on-vehicle device 1, when it receives the designated speech rate together with the speech voice information data, supplies them to the control unit 21.

The control unit 21, when it receives the speech voice information data and the designated speech rate value, determines the speech rate on the basis of the preset reference speech rate value and the designated speech rate value. In Embodiment 2, the control unit 21 determines the speech rate on the basis of the sum of the reference speech rate value and the designated speech rate value.

Here, by way of example, the reference speech rate value is supposed to be an integer out of 1 to 5. For the reference speech rate, 3 is the default (namely, the initial value in a state in which the user has not yet set any value), 1 is the minimum speech rate and 5 is the maximum speech rate. The designated speech rate is supposed to be an integer out of 1 to 5 for example. Regarding the designated speech rate, the closer it is to 1, the lower the speech rate is designated, and the closer it is to 5, the higher the speech rate is designated. The control unit 21 determines a speech rate out of the reference speech rate values and the designated speech rate values of 1 to 5. Incidentally, though it is supposed here that the value of the speech rate is an integer out of 1 to 5, at the time of speech synthesis it is converted into or interpreted to be, as appropriate, the number of characters uttered, the number of words uttered or the like per unit time corresponding to that integer.

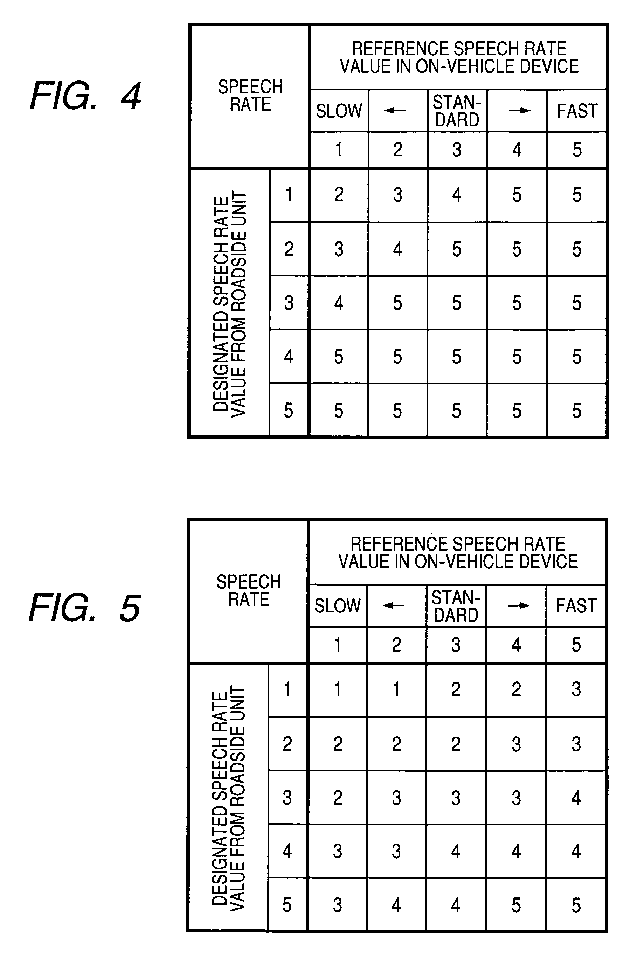

FIG. 4 shows reference speech rate values in the on-vehicle device 1 and the relationship between designated speech rate values from roadside units 2 and actual speech rates in Embodiment 2. In Embodiment 2, the control unit 21 calculates the sums of reference speech rates and designated speech rates as shown in FIG. 4, and uses such sums as the values of speech rates. However, where the sum of a reference speech rate value and a designated speech rate value surpasses the upper limit of a speech rate (5 here), that upper limit (5 here) is supposed to be the value of the speech rate. Incidentally, the table shown in FIG. 4 may either be built into the control unit 21 or stored in advance into a recording medium not shown for subsequent reference by the control unit 21.

Having determined the speech rate value in this way, the control unit 21 executes speech synthesis at a speech rate corresponding to that speech rate value, and supplies speech signals to the voice output unit 20. The voice output unit 20 outputs speech corresponding to those speech signals.

As described so far, according to this Embodiment 2, the on-vehicle device 1 determines the speech rate when reproducing speech from speech voice information data, and generates speech signals based on the speech voice information data at the determined speech rate.

Further according to this Embodiment 2, in the on-vehicle device 1, the control unit 21 as reference speech rate setting means sets the reference speech rate value depending on the user's action on the input unit 18 as input means. Then, the control unit 21 determines the speech rate on the basis of the reference speech rate value and the designated speech rate value, and generates speech signals based on the speech voice information data at the determined speech rate. In particular in Embodiment 2, the control unit 21 determines the speech rate on the basis of the sum of the reference speech rate value and the designated speech rate value.

This enables the speech rate to be varied as the situation requires and, in the case of alerting voice information, the user to be securely alerted by a raise in speech rate. As the speech rate is fixed at normal times, varying the speech rate can give a more secure alert than varying the voice volume.

Especially, as the speech rate of voice information is determined on the basis of a reference speech rate value set by the user and the speech rate of voice information is also determined on the basis of a designated speech rate value instructed by a roadside unit 2 and the server 3, the voice information can be uttered as speech at a speed easy to hear for the user and in accordance with the instruction of the roadside unit 2.

### Embodiment 3

In a voice information providing system in Embodiment 3 of the present invention, a designated speech rate value is supplied from the server 3 to the on-vehicle device 1 together with voice information data, and the on-vehicle device 1 determines the speech rate on the basis of a reference speech rate value set by the user and its designated speech rate value. Thus, the speech rate can be controlled both on the roadside unit 2 side and on the on-vehicle device 1 side. Further in Embodiment 3, the speech rate takes on a value adjusted with reference to the designated speech rate value from a roadside unit 2 by a value corresponding to the reference speech rate value set by the on-vehicle device 1.

The hardware configurations of the on-vehicle device 1, the roadside units 2 and the server 3 in Embodiment 3 are substantially the same as those in Embodiment 1 (FIG. 1). However, each device executes the processing describe below.

The actions of each device in this system will be described. Incidentally, as the actions of the server 3 and the roadside units 2 are similar to those in Embodiment 2, their description will be dispensed with.

The control unit 21 of the on-vehicle device 1, when it receives speech voice information data and the designated speech rate value, determines the speech rate on the basis of that designated speech rate value and a preset reference speech rate value. In Embodiment 3, priority is given to designated speech rates from the roadside units 2 in determining the speech rate value. The control unit 21 determines as the speech rate a value adjusted with reference to the designated speech rate value by a value corresponding to the reference speech rate value.

FIG. 5 shows reference speech rate values in the on-vehicle device 1 and the relationship between designated speech rate values from the roadside units 2 and actual speech rates in Embodiment 3.

For instance, where the user has never set the reference speech rate value on the on-vehicle device 1 side and the default prevails, the speech rate value at normal times will be 3, and the designated speech rate value from a roadside unit 2 (e.g. 5) will be the speech rate value as it is. On the other hand, where the user has set the reference speech rate value on the on-vehicle device 1 side, the average of the designated speech rate value from the roadside unit 2 and the reference speech rate value is used as the speech rate value. If the average is not an integer, the below-decimal fraction is so rounded as to bring it close to the designated speech rate value from the roadside unit 2.

The table shown in FIG. 5 may either be built into the control unit 21 or stored in advance into a recording medium not shown for subsequent reference by the control unit 21.

Having determined the speech rate value in this way, the control unit 21 executes speech synthesis at a speech rate corresponding to that speech rate value, and supplies speech signals to the voice output unit 20. The voice output unit 20 outputs speech corresponding to those speech signals.

As described so far, according to this Embodiment 3, the on-vehicle device 1 determines the speech rate when reproducing speech from speech voice information data, and generates speech signals based on the speech voice information data at the determined speech rate.

Further according to this Embodiment 3, in the on-vehicle device 1, the control unit 21 sets the reference speech rate value depending on the user's action on the input unit 18. Then, the control unit 21 determines the speech rate value on the basis of the reference speech rate value and the designated speech rate value, and generates speech signals based on the speech voice information data at the determined speech rate value. In particular in Embodiment 3, the control unit 21 determines as the speech rate a value adjusted with reference to the designated speech rate value by a value corresponding to the reference speech rate value.

This enables the speech rate to be varied as the situation requires and, in the case of alerting voice information, the user to be securely alerted by a raise in speech rate. As the speech rate is fixed at normal times, varying the speech rate can give a more secure alert than varying the voice volume. Further, as the speech rate is determined mainly on the basis of a reference speech rate value, the voice information can be uttered as speech at a speed depending on a speed instructed by a roadside unit 2, the speech rate can be controlled on the roadside unit 2 side depending on the content of the voice information.

### Embodiment 4

In a voice information providing system in Embodiment 4 of the present invention, a designated speech rate value is supplied from the server 3 to the on-vehicle device 1 together with voice information data, and the on-vehicle device 1 determines the speech rate value on the basis of a reference speech rate value set by the user and its designated speech rate value. Thus, the speech rate can be controlled both on the roadside unit 2 side and on the on-vehicle device 1 side. Further in Embodiment 4, the speech rate takes on a value adjusted with reference to the designated speech rate value from a roadside unit 2 by a value corresponding to the reference speech rate value set by the on-vehicle device 1.

The hardware configurations of the on-vehicle device 1, the roadside units 2 and the server 3 in Embodiment 4 are substantially the same as those in Embodiment 1 (FIG. 1). However, each device executes the processing describe below.

The actions of each device in this system will be described. Incidentally, as the actions of the server 3 and the roadside units 2 are similar to those in Embodiment 2, their description will be dispensed with.

The control unit 21 of the on-vehicle device 1, when it receives speech voice information data and the designated speech rate value, determines the speech rate on the basis of that designated speech rate value and a preset reference speech rate value. In Embodiment 4, priority is given to the reference speech rate value from the on-vehicle device 1 in determining the speech rate value. The control unit 21 determines as the speech rate a value adjusted with reference to the reference speech rate value by a value corresponding to the designated speech rate value.

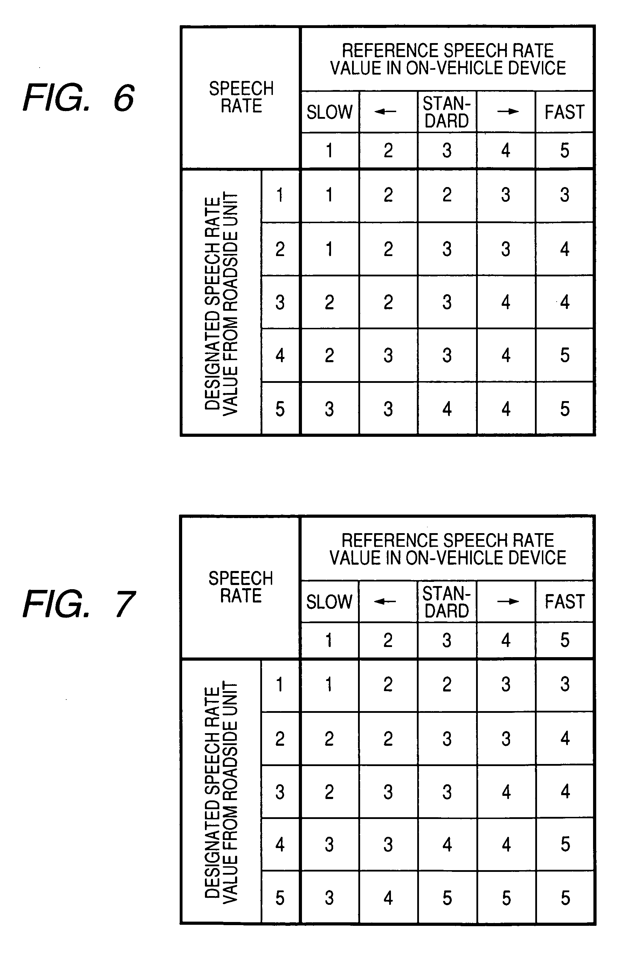

FIG. 6 shows reference speech rate values in the on-vehicle device 1 and the relationship between designated speech rate values from the roadside units 2 and actual speech rates in Embodiment 4.

For instance, where the user has never set the reference speech rate value on the on-vehicle device 1 side and the default prevails, the speech rate value at normal times will be 3, and the designated speech rate value from a roadside unit 2 (e.g. 5) will be the speech rate value as it is. On the other hand, where the user has set the reference speech rate value on the on-vehicle device 1 side, the average of the designated speech rate value from the roadside unit 2 and the reference speech rate value is used as the speech rate value. If the average is not an integer, the below-decimal fraction is so rounded as to bring it close to the designated speech rate value set by the on-vehicle device 1.

The table shown in FIG. 6 may either be built into the control unit 21 or stored in advance into a recording medium not shown for subsequent reference by the control unit 21.

Having determined the speech rate value in this way, the control unit 21 executes speech synthesis at a speech rate corresponding to that speech rate value, and supplies speech signals to the voice output unit 20. The voice output unit 20 outputs speech corresponding to those speech signals.

As described so far, according to this Embodiment 4, the on-vehicle device 1 determines the speech rate when reproducing speech from speech voice information data, and generates speech signals based on the speech voice information data at the determined speech rate.

The control unit 21 sets the reference speech rate depending on the user's action on the input unit 18. Then, the control unit 21 determines the speech rate value on the basis of the reference speech rate value and the designated speech rate value, and generates speech signals based on the speech voice information data at the determined speech rate value. In particular in Embodiment 4, the control unit 21 determines as the speech rate value a value adjusted with reference to the reference speech rate value by a value corresponding to the designated speech rate value.

This enables the speech rate to be varied as the situation requires and, in the case of alerting voice information, the user to be securely alerted by a raise in speech rate. As the speech rate is fixed at normal times, varying the speech rate can give a more secure alert than varying the voice volume. Further, as the speech rate is determined mainly on the basis of a reference speech rate value, the voice information can be uttered as speech at a speed easy to hear for the user.

### Embodiment 5

In a voice information providing system in Embodiment 5 of the present invention, a designated speech rate value is supplied from the server 3 to the on-vehicle device 1 together with voice information data, and the on-vehicle device 1 determines the speech rate on the basis of a reference speech rate value set by the user and its designated speech rate value. Thus, the speech rate can be controlled both on the roadside unit 2 side and on the on-vehicle device 1 side. Further in Embodiment 5, the speech rate takes on a value corresponding to an intermediate value between the reference speech rate value set by the on-vehicle device 1 and the designated speech rate value from a roadside unit 2.

The hardware configurations of the on-vehicle device 1, the roadside units 2 and the server 3 in Embodiment 5 are substantially the same as those in Embodiment 1 (FIG. 1). However, each device executes the processing describe below.

The actions of each device in this system will be described. Incidentally, as the actions of the server 3 and the roadside units 2 are similar to those in Embodiment 2, their description will be dispensed with.

The control unit 21 of the on-vehicle device 1, when it receives speech voice information data and a designated speech rate value, determines the speech rate on the basis of the designated speech rate value and a preset reference speech rate value. In Embodiment 5, the control unit 21 uses as the speech rate value designating the speech rate of voice information an intermediate value between the reference speech rate value and the designated speech rate value.

FIG. 7 shows reference speech rate values in the on-vehicle device 1 and the relationship between designated speech rate values from roadside units and actual speech rate values in Embodiment 5. In Embodiment 5, the speech rate value takes on an intermediate value between the designated speech rate value from a roadside unit 2 and the reference speech rate value of the on-vehicle device 1. If the designated speech rate value and the reference speech rate value are the same, that value is determined as the speech rate value. If the intermediate value is not an integer, the below-decimal fraction is rounded to make the value an integer.

The table shown in FIG. 7 may either be built into the control unit 21 or stored in advance into a recording medium not shown for subsequent reference by the control unit 21.

Having determined the speech rate value in this way, the control unit 21 executes speech synthesis at a speech rate corresponding to that speech rate value, and supplies speech signals to the voice output unit 20. The voice output unit 20 outputs speech corresponding to those speech signals.

As described so far, according to this Embodiment 5, the on-vehicle device 1 determines the speech rate when reproducing speech from speech voice information data, and generates speech signals based on the speech voice information data at the determined speech rate.

Further according to this Embodiment 5, in the on-vehicle device 1, the control unit 21 sets the reference speech rate depending on the user's action on the input unit 18. Then, the control unit 21 determines the speech rate value on the basis of the reference speech rate value and the designated speech rate value, and generates speech signals based on the speech voice information data at the determined speech rate value. In particular in Embodiment 5, the control unit 21 determines as the speech rate based on an intermediate value between the reference speech rate value and the designated speech rate value.

This enables the speech rate to be varied as the situation requires and, in the case of alerting voice information, the user to be securely alerted by a raise in speech rate. As the speech rate is fixed at normal times, varying the speech rate can give a more secure alert than varying the voice volume.

Especially, as the speech rate of voice information is determined on the basis of a reference speech rate value set by the user and at the same time on the basis of designated speech rates instructed by a roadside unit 2 and the server 3, the voice information can be uttered as speech at a speed easy for the user to hear and depending on a speed instructed from the roadside unit 2 side.

Incidentally, though the embodiments so far described above represent appropriate examples of the invention, the invention is not limited to these modes, but can be modified or altered in various ways within the extent of not deviating from the essentials of the invention.

For instance, though the speech rates of voice information supplied from the roadside units 2 is controlled in each embodiment, the speech rates of other voice information items occurring in vehicle navigation such as guide information may also be controlled in the same way. In that case, data including voice information data are stored into the on-vehicle device 1 in advance.

Further, whereas the speech rate is controlled on the basis of the vehicle speed in Embodiment 1 and in Embodiments 2 through 5 it is controlled on the basis of the reference speech rate value set by the on-vehicle device 1 and designated speech rate values designated by the roadside units 2, control of the speech rate based on the vehicle speed may as well be added to speech rate control by the on-vehicle device 1 in each of Embodiments 2 through 5. In that case, the speech rate determined by the on-vehicle device 1 in each of Embodiments 2 through 5 above may be increased or decreased according to the values of vehicle speed data.

While the on-vehicle device in each of the embodiments of the invention is supposed to be a navigation device, it may as well be realized as a device having no navigating function. For instance, it may be a radio broadcast receiver, an audio device of one kind or another, or a device dedicated to one of these functions. Or it may be realized as a device connectable to a navigation device, and various functions in the navigation device, including that of the voice output unit 20, may be used as appropriate.

Further, while the control unit 21 determines the speech rate on the basis of the sum of the reference speech rate value and the designated speech rate value in Embodiment 2, the speech rate may as well be determined on the basis of either the average or the product of the two. Where they are to be averaged, one or the other values may be weighted as appropriate.

Further in each of the embodiments, the speech volume or speech tone may be determined depending on the speech rate determined by the control unit 21 as speech information determining means. In that case, the control unit 21 generates speech signals based on speech voice information data at that speech rate and in that speech volume (namely an amplitude corresponding to that volume), or the control unit 21 may control the voice output unit 20 and so adjusts the volume of the speech outputted from the voice output unit 20 as to have that speech volume.

Further in each of the embodiments, the control unit 21 as speech rate determining means may as well determine the speech rate depending on the distance between a specific position corresponding to geographical position information added to the voice information data and the current position. In that case, the geographical position information is added to each set of voice information data in the server 3 and supplied from the roadside units 2 to the on-vehicle device 1 together with the voice information data, or stored into the on-vehicle device 1 together with voice information data for navigational use. The current position is identified from current position data obtained by the GPS receiver 15. The control unit 21 executes the control of the speech rate as in each of the embodiments when, for instance, the distance between a specific position and the current position is at or above a prescribed threshold, and otherwise executes no control of the speech rate. Also, the control unit 21 may increase or decrease the speech rate depending on the distance between a specific position and the current position. In that case, it increases the speech rate with a decrease in the distance.

### INDUSTRIAL APPLICABILITY

The present invention can be applied to, for instance, on-vehicle navigation devices.

## Claims

1. An on-vehicle device to be mounted on a vehicle **characterized in that** it is provided with:
speech rate determining means that determines a speech rate when reproducing speech from received speech voice information data, and
speech signal generating means that generates speech signals based on said speech voice information data at the designated speech rate determined by said speech rate determining means.

2. The on-vehicle device according to Claim 1, **characterized in that** said speech rate determining means, in reproducing speech from speech voice information data, uses a prescribed reference speech rate as the speech rate when the speech voice information data are not prescribed data of high urgency or uses a higher rate than said reference speech rate as the speech rate when the speech voice information data are prescribed data of high urgency.

3. The on-vehicle device according to Claim 1, **characterized in that** said speech rate determining means, in reproducing speech from speech voice information data, determines the speech rate depending on the speed of said vehicle at the point of time.

4. The on-vehicle device according to Claim 1, **characterized in that** it is further provided with input means that is acted upon by a user and reference speech rate setting means that sets a reference speech rate depending on the action of the user upon said input means, wherein
said speech rate determining means determines the speech rate on the basis of said reference speech rate and a designated speech rate value set in said speech voice information data, and
said speech signal generating means generates speech signals based on said speech voice information data at the speech rate determined by said speech rate determining means.

5. The on-vehicle device according to Claim 4, **characterized in that** said speech rate determining means determines the speech rate on the basis of said reference speech rate and a prescribed table in which said designated speech rates are set.

6. The on-vehicle device according to Claim 4, **characterized in that** said speech rate determining means uses as the speech rate a value adjusted with reference to said designated speech rate value by a value corresponding to said reference speech rate value or a value adjusted with reference to said reference speech rate by a value corresponding to said designated speech rate value.

7. The on-vehicle device according to Claim 4, **characterized in that** said speech rate determining means determines the speech rate on the basis of said reference speech rate, said designated speech rate value and the speed of said vehicle.

8. The on-vehicle device according to Claim 1, **characterized in that** said speech rate determining means determines the speech rate depending on the distance between a position according to geographical position information added to said voice information data and the current position.

9. The on-vehicle device according to Claim 1, **characterized in that** it is further provided with receiving means that receives said speech voice information data from a fixed device, wherein:
said speech rate determining means, when said receiving means receives said speech voice information data, determines the speech rate at that point of time, and
said speech signal generating means generates speech signals based on said speech voice information data at the speech rate determined by said speech rate determining means.

10. The on-vehicle device according to Claim 1, **characterized in that** it is further provided with determining means for said speech information that determines a speech volume or a speech tone depending on said speech rate, wherein
said speech signal generating means generates speech signals based on said speech voice information data at said speech rate and in the speech volume or speech tone determined by said speech information determining means.

11. A voice information providing system **characterized in that** it is provided with the on-vehicle device according to Claim 10, and
a server which transmits speech voice information data to said on-vehicle device via a fixed device.

12. A speech rate adjusting method **characterized in that** it is provided with:
a step of determining a speech rate when reproducing speech from speech voice information data with an on-vehicle device mounted on a vehicle, and
a step of generating speech signals based on said speech voice information data at said determined speech rate.
